# EUROPÄISCHE PATENTANMELDUNG

(11) **EP 1 972 197 A2**
(43) Veröffentlichungstag der Anmeldung: **24.09.2008**
(21) Anmeldenummer: 08004556.0
(22) Anmeldetag: 12.03.2008
(51) Int. Cl.: A23B 4/24, A23C 19/16, A22C 13/00, B65D 81/28

(54) **Lebensmittelhülle mit antimikrobiellen Eigenschaften und Verfahren zur Herstellung derselben**

(30) Priorität: 12.03.2007 DE 102007011848
(71) Anmelder: Wiberg GmbH, 5020 Salzburg (AT)
(72) Erfinder: Loidl, Anton, 4820 Bad Ischl (AT); Ramsl, Hans Peter, 5431 Kuchl (AT)
(74) Vertreter: Beyer, Andreas

(57) **Zusammenfassung**

Die Erfindung betrifft ein Verfahren zur Herstellung einer Lebensmittelhülle mit antimikrobiellen Eigenschaften, bei dem Nanosilber auf die Außenseite einer Lebensmittelhülle aufgebracht oder in eine Lebensmittelhülle eingearbeitet wird. Die vorliegende Erfindung betrifft des Weiteren eine Lebensmittelhülle mit antimikrobiellen Eigenschaften, die Nanosilber umfasst, sowie die Verwendung einer solchen Hülle zum Umhüllen eines Lebensmittels.

## Beschreibung

Die Erfindung betrifft ein Verfahren zur Herstellung einer Lebensmittelhülle mit antimikrobiellen Eigenschaften, bei dem Nanosilber auf die Außenseite einer Lebensmittelhülle aufgebracht oder in eine Lebensmittelhülle eingearbeitet wird. Die vorliegende Erfindung betrifft des Weiteren eine Lebensmittelhülle mit antimikrobiellen Eigenschaften, die Nanosilber umfasst, sowie die Verwendung einer solchen Hülle zum Umhüllen eines Lebensmittels.

Das Auftreten von mikrobiellen Kontaminationen auf der Außenseite von Lebensmitteln ist ein in der Lebensmittelindustrie bekanntes Problem, das zu Produktionsausfällen, Produktverlusten und Absatzeinbussen führt. Die Verhinderung von mikrobiellen Kontaminationen als Hauptursache für den Verderb von Lebensmitteln und die Verlängerung von Mindesthaltbarkeitsfristen stellen folglich eine große Herausforderung für alle Lebensmittelproduzenten, wie etwa fleisch- und käseverarbeitende Betriebe, dar.

Neben Bakterienbewuchs stellt vor allem das Wachstum von Schimmelpilzen und Hefen auf der Oberfläche der jeweiligen Lebensmittelware ein Problem dar. Der Bakterien- und Schimmelbefall beginnt dabei zunächst auf der Außenseite der Därme bzw. Hüllen oder Folien und kann nachfolgend auch auf das darin enthaltene Lebensmittel übergreifen. So werden Lebensmittel, wie beispielsweise Rohwürste oder Käse, oft bereits während der Produktion (z.B. in der Reifekammer oder Presse), bei der Zwischenlagerung (z.B. im Nachreiferaum oder Pufferlager), sowie im Verlauf der Handelskette (z.B. im Regal oder in der Theke) von Schimmel, Hefen und gegebenenfalls anderen mikrobiellen Keimen befallen. Dies führt dazu, dass die Lebensmittel optisch unansehnlich, nicht mehr genießbar oder sogar gesundheitsschädlich werden. Als Folge davon können diese Produkte nicht mehr verkauft werden und müssen stattdessen entsorgt werden. Zusätzlich ziehen solche durch Schimmel, Pilze, Bakterien, etc. befallenen Lebensmittelprodukte Reklamationen nach sich, die mit einem personellen und finanziellen Mehraufwand einhergehen. Ferner müssen möglicherweise kostspielige Sterilisierungsmaßnahmen zur Dekontamination der befallenen Räume, Gegenstände, Oberfläche, etc. ergriffen werden. Falls die Ware bereits während der Produktion mit mikrobiellen Keimen befallen wird, kann es auch zu einer unerwünschten und kostspieligen Unterbrechung der Produktion kommen.

Die oben beschriebenen Probleme werden zur Zeit durch unterschiedliche Maßnahmen gelöst. Es werden beispielsweise antimikrobiell wirksame Substanzen eingesetzt. Diese können allerdings zu unerwünschten Wirkungen im Lebensmittel führen. Ferner hält die Dekontaminationswirkung meist nur für eine kurze Zeitdauer an und wird im Falle einer oberflächlichen Anwendung der antimikrobiellen Substanz leicht durch Abspülen neutralisiert. Ein weiterer Nachteil besteht darin, dass diese antimikrobiellen Substanzen deshalb erst nach der Fertigstellung der Ware, d.h. nach Tauch- und Sprühschritten, etc., aufgebracht werden können.

Eine andere Möglichkeit zur Abtötung von Mikroorganismen in Lebensmitteln stellt das Bestrahlen von Lebensmitteln mit ionisierender Strahlung dar. Diese Art der Haltbarmachung ist allerdings in vielen Ländern verboten. So ist in Deutschland die Bestrahlung von Lebensmitteln seit 1995 grundsätzlich untersagt und in der EU seit 1999 nur für getrocknete aromatische Kräuter und Gewürze erlaubt. Die Bestrahlung hat zusätzlich den Nachteil, dass auch dieses Verfahren bei vorhandenen Rekontaminationsrisiken keinen dauerhaften Schutz gewährt.

Andere bekannte Verfahren zur Verhinderung von durch Mirkoorganismen verursachten Zerfallsprozessen umfassen das Trocknen, Räuchern, Einsalzen, Einzuckern und Tränken mit konservierend wirkenden Substanzen, wie beispielsweise Alkohol oder Essig, das Einsäuren durch Milchsäuregärung und die Hochdruckentkeimung (Pasteurisieren). Diese Verfahren eignen sich allerdings nur für bestimmte Lebensmittel und können für eine Vielzahl von Lebensmittel, wie diejenigen, die einem mikrobiellen Reifungsprozess unterliegen, beispielsweise Wurstwaren und Käse, nicht angewendet werden. Zudem sind diese Verfahren nur nach Innen, d.h. im Lebensmittel wirksam, nicht jedoch nach Außen für die Behüllung im Sinne eines GrifFschutzes für die Verpackung.

Weitere gelegentlich eingesetzte Mittel vertuschen den mikrobiellen Verfall von Lebensmitteln lediglich, ohne das mikrobielle Wachstum bereits im Vorfeld effizient zu unterbinden. So wird beispielsweise gelegentlich Kaliumpermanganat zur Behandlung von bereits deutliche Anzeichen von Verderb aufweisendem Fleisch eingesetzt. Solche Maßnahmen verstoßen oftmals gegen gesetzliche Bestimmungen, gefährden die Gesundheit der Verbraucher und/oder verändern das Aussehen oder den Geschmack der jeweiligen Produkte in nachteiliger Weise.

Der Erfindung liegt daher die Aufgabe zugrunde, eine gesundheitlich unbedenkliche Lebensmittelhülle mit antimikrobiellen Eigenschaften bereitzustellen, bei der das Auftreten bzw. die Vermehrung von mikrobiellen Kontaminationen auf der Lebensmittelhülle langfristig wirksam verhindert ist, und welche einfach und kostengünstig herstellbar ist.

Die Aufgabe wird gemäß der vorliegenden Erfindung dadurch gelöst, dass Nanosilber auf die Außenseite einer Lebensmittelhülle aufgebracht oder in eine Lebensmittelhülle eingearbeitet wird.

Die so hergestellte erfindungsgemäße Nanosilber umfassende Lebensmittelhülle mit antimikrobiellen Eigenschaften weist gegenüber den bislang bekannten Lebensmittelhüllen den Vorteil auf, dass durch die Anwendung von Nanosilber auf einfache Weise ein kontrollierter Langzeitschutz gegen eine Vielzahl von Mikroorganismen, wie Bakterien und Pilze, insbesondere Schimmel und Hefen, bereitgestellt wird. Das heißt insbesondere, dass das Wachstum von Mikroorganismen auf der Außenseite der Lebensmittelhülle, d.h. der dem Lebensmittel abgewandten Seite, verhindert wird. Aufgrund der Immobilisierung von Nanosilber in der Hülle bleibt die Schutzwirkung auf der Hülle auch bei den üblichen Vor- und Weiterbehandlungsschritten, wie beispielsweise Wässern, Füllen, Brühen, Duschen und Lagern erhalten und kann nicht abgewaschen oder abgerieben werden. Das heißt mit anderen Worten, dass die erfindungsgemäße Lebensmittelhülle eine Langzeit-Depotwirkung in der Verpackung bereitstellt, ohne auf das verpackte Lebensmittel Einfluss zu nehmen. Zudem gelangt das in der Hülle immobilisierte Nanosilber nicht in das Gefüllgut, so dass eine allfällige gesundheitsschädigende Wirkung auf den Verbraucher ausgeschlossen werden kann.

Ferner treten aufgrund der antimikrobiellen Wirkung des in der Hülle immobilisierten Nanosilbers keine durch Mikroorganismen ausgelöste proteolytische oder lipolytische Abbauvorgänge auf, die zu geschmacklichen oder optischen Veränderungen des Gefüllguts führen. Des Weiteren wird eine Gesundheitsgefährdung des Verbrauchers durch Mycelien in der Primärverpackung oder die Gefahr der Entstehung von hochtoxischen Mycotoxinen im Produkt zuverlässig vermieden.

Darüber hinaus wird die Anzahl von Reklamationen oder Rücksendungen von mit Mikroorganismen, insbesondere Schimmel und Hefen, befallenen und damit nicht mehr verkehrsfähigen Produkten deutlich reduziert, wodurch Kosten gesenkt werden. Ferner können durch eine mikrobielle Kontamination verursachte Produktionsausfälle gänzlich vermieden bzw. in der Anzahl deutlich verringert werden. Außerdem wird der allgemeine Keimstatus, wie der Schimmelstatus, in den Produktionsräumen bei gleichbleibender hygienischer Sorgfalt verbessert. Schließlich sind keine zusätzlichen Arbeitsschritte zur Keimvorsorge, insbesondere Schimmelvorsorge, wie beispielsweise Abbürsten, Nachräuchern, Besprühen mit antimikrobiellen Substanzen, etc., im Produktionsbetrieb erforderlich, wodurch Kosten eingespart werden können.

Als Nanosilber wird in der vorliegenden Erfindung nanoskaliges Silber (kolloidales Silber) mit einem Teilchendurchmesser im Submikrometerbereich verwendet. Diese nanoskaligen Silberteilchen stellen ein Silberdepot dar, aus dem durch Oxidation kontinuierlich bioaktive Silberionen (Ag⁺) herausgelöst werden, welche in äußerst geringen Konzentrationen Bakterien und Pilze, sowie in geringerem Umfang auch Viren, inaktivieren bzw. abtöten können. Im Rahmen der vorliegende Erfindung umfasst der Begriff "Mikroorganismus" daher in erster Linie Bakterien und Pilze, insbesondere Hefen.

Das gemäß der vorliegenden Erfindung verwendete Nanosilber liegt in immobilisierter Form vor. Dadurch wird ein unkontrolliertes Verteilen bzw. Migrieren der Silberteilchen in das verpackte Lebensmittel verhindert. Gleichzeitig wird ein hervorragender Langzeitschutz gegen eine Vielzahl von Mikroorganismen auf der Lebensmittelhülle bereitgestellt.

Die antimikrobielle Wirkung von Silberionen wird bereits bei einigen Anwendungen ausgenutzt. So wird Nanosilber für die Beschichtung von Oberflächen, wie beispielsweise Innenoberflächen von Kühlschränken und Oberflächen von Kunststoffen zur Anwendung in der Medizintechnik, verwendet. Ein weiteres Anwendungsgebiet von Nanosilber sind Textilprodukte, wie beispielsweise Socken, um das Wachstum von Bakterien und damit die Entstehung von unangenehmen Gerüchen zu vermeiden.

Die Konzentration der bioaktiven Silberionen kann durch die Menge des verwendeten Nanosilbers sowie durch die Größe der Nanosilberteilchen kontrolliert werden. Je geringer der Durchmesser der Nanosilberteilchen ist, desto größer ist die Oberfläche im Vergleich zum Volumen der Teilchen, so dass prozentual gesehen mehr bioaktive Silberionen durch Oxidationsprozesse freigesetzt werden. Die genaue Teilchengrösse und Menge des Nanosilbers richtet sich nach den zu erwartenden mikrobiellen Keimen, die eine unterschiedliche Empfindlichkeit gegenüber Silberionen aufweisen können, sowie der verwendeten Hülle, der gewünschten Abtötungsrate, etc.

Vorzugsweise wird Nanosilber mit einem Teilchendurchmesser von weniger als 100 nm, insbesondere weniger als 50 nm, verwendet. Vorzugsweise liegt die Teilchengröße des Nanosilbers im Bereich von 5 bis 50 nm und besonders bevorzugt im Bereich von 10 bis 30 nm. Ein solches bevorzugtes Nanosilber mit einer mittleren Teilchengröße von 20 nm kann beispielsweise von der Firma rent a scientist GmbH, Regensburg, bezogen werden.

Die Konzentration des Nanosilbers auf oder in der Lebensmittelhülle beträgt vorzugsweise 0,1 bis 10 µg Nanosilber pro cm² der Hülle, insbesondere 1 bis 5 µg Nanosilber pro cm² der Hülle.

Gemäß einer ersten Alternative des erfindungsgemäßen Verfahrens zur Herstellung einer Lebensmittelhülle mit antimikrobiellen Eigenschaften wird das Nanosilber auf die Außenseite der Lebensmittelhülle aufgebracht, wobei dies vorzugsweise in Form einer Zusammensetzung, umfassend Nanosilber, erfolgt. Diese Zusammensetzung kann ferner wenigstens eine Verbindung umfassen, die aus der Gruppe bestehend aus einem Lack und einem Kleber ausgewählt ist. Vorzugsweise sollten die Lacke und Kleber für den Lebensmittelbereich zugelassen sein.

Bevorzugte Lacke umfassen Zweikomponentenlacke, Lacke auf Wasserbasis, Lacke auf Alkoholbasis, etc. Beispiele für solche Lacke sind sämtliche Lacke für beliebige Drucksysteme, wie Flexodruck, Tiefdruck, OfFsetdruck, etc., die für den Bereich Lebensmittelverpackung zugelassen sind. Besonders bevorzugte Lacke sind 2K-Flexodruckfarben. Die Lacke haben neben ihrer üblichen Glanz- und Schutzwirkung den Effekt, die kolloidalen Silberpartikel aufzunehmen, zu stabilisieren und zu immobilisieren, ohne dass nennenswerte oder gar gesundheitsschädliche Mengen an kolloidalem oder ionischen Silber auf bzw. in das Lebensmittel gelangen können.

Als Kleber können alle flüssigen bis hochviskosen Substanzen mit hochmolekularen Beladungen verwendet werden. Beispiele hierfür sind Caseinat, Gelatine, Stärken, Pektine, Quellmittel und andere hochmolekulare bzw. polymere Verbindungen. Bevorzugte Kleber umfassen Caseinat und Stärke. Diese dienen dazu, das kolloidale Silber zu immobilisieren und es dauerhaft in gleichbleibender Konzentration auf einer Lebensmittelhülle zu fixieren.

Das Nanosilber kann durch verschiedene bekannte Druckverfahren, wie beispielweise ein Vollflächendruckverfahren oder ein Rasterdruckverfahren, auf die Lebensmittelhülle, wie eine Wursthülle, aufgedruckt werden. Weitere Möglichkeiten umfassen Tauchverfahren, Aufsprühen oder Bepinseln bzw. Anstreichen. Ein bevorzugtes Verfahren ist das Rasterdruckverfahren Das im Einzelfall verwendete Verfahren wird vorrangig durch die gewünschten Anforderungen (z.B. Barrierestärken) von Kundenseite bestimmt. Ein bevorzugtes Verfahren ist die Rasterdrucktechnik. Feinabstimmungen können durch die Rasterart (Positivraster / Negativraster) sowie Dichte oder Größe des Rasters erzielt werden. Wasserabgabe und Rauch- bzw. Sauerstoffdurchlässigkeit können damit exakt eingestellt werden.

Gemäß einem beispielhaften Verfahren zum Aufbringen einer Nanosilber enthaltenden Zusammensetzung auf eine Hülle wird ein Faserdarm bzw. -hülle, wie eine Viskosehülle, in eine Druckmaschine eingespannt und genau ausgerichtet. Unter Zugspannung, die abhängig vom Zustand der Rohware ist, wird die Hülle mit einer oben beschriebenen Mischung aus Lack, Kleber und Nanosilber bedruckt. Als Klischees werden vorzugsweise Fotopolymerklischees verwendet. Durch einem Fachmann bekannte Prüfverfahren wird sichergestellt, dass die gesamte Hüllenoberfläche nach vorgegebenen Anforderungen, wie Durchlässigkeitsgrad, bedruckt und damit geschützt ist.

Alternativ zu dem oben beschriebenen Aufbringen von Nanosilber auf die Lebensmittelhülle, kann das Nanosilber auch in die Hülle eingearbeitet werden. Bevorzugte Hüllen hierfür sind Faserdärme bzw. -hüllen und beschichtete Faserdärme bzw. - hüllen, insbesondere beschichtete oder nicht beschichtete Viskosedärme bzw. - hüllen. Ein Faserdarm ist ein Kunstdarm aus Cellulosehydrat, der durch nassverfestigte Fasern aus Cellulose verstärkt ist. Beschichtete Faserdärme weisen zusätzlich noch wenigstens eine weitere Barriereschicht aus Kunststoff auf der Innen- und/oder Außenseite auf. Zur Herstellung von Viskosehüllen mit eingearbeitetem Nanosilber wird das Nanosilber in Viskose inkorporiert und die resultierende Viskose auf einen Papierschlauch aufgebracht, wodurch eine Viskosehülle hergestellt werden kann. Einem Fachmann sind die entsprechenden Verfahren zur Herstellung einer solchen Hülle bekannt oder ohne größeren Aufwand auf einfache Art und Weise ermittelbar.

Gemäß einem beispielhaften Verfahren zum Einarbeiten von Nanosilber in eine Hülle wird ein mit Viskose, Celluloseacetatlösung oder Kunststoffloten nassverfestigtes Faservlies im jeweilig gewünschten Kaliber (Breite) über Formschultern zu einem überlappenden Schlauch geformt. Die überlappenden Enden werden mit nicht nanosilberbeladener Viskose getränkt (Kleberfunktion). Im weiteren Verlauf wird die Papierhülle von außen mit der nanosilberversetzten Viskose getränkt und gegebenenfalls zusätzlich nicht nanosilberversetzte Viskose gemäß einem bekannten Verfahren innen aufgebracht. Anschließend wird der Darm durch Fällbäder und Reinigungsbäder gezogen, wodurch es zur Umwandlung von Viskose in Cellulose kommt. Der Darm wird anschließend getrocknet und im Bedarfsfall noch mit gewünschten Imprägnierungen, z. B. Innen zum Zwecke von mehr Haftung bzw. Antihaftung, versehen.

Bei Faserdärmen kann eine Doppelviskosierung, d.h. eine weitere Viskoseaufbringung auf der Innenseite (Viskose ohne Silberbeimengung), den direkten Kontakt von kolloidalen Silber mit dem Lebensmittel verhindert. Bei innenbeschichteten Faserdärmen genügt die allgemein übliche äußere Viskosierung, da auf der Innenseite die Kunststoffbarriereschicht den direkten Kontakt zum Lebensmittel unterbindet. Bei außenbeschichteten Faserdärmen, bei denen die Kunststoffsperrschicht außen angeordnet ist, wird gegebenenfalls auf eines der oben erwähnten Verfahren zum Aufbringen von Nanosilber auf eine Hülle, insbesondere das Vollflächendruckverfahren, zurückgegriffen.

Im Rahmen der vorliegenden Erfindung werden als Lebensmittelhüllen vorzugsweise einschichtige bzw. mehrschichtige Polymerfolien verwendet. Diese sind insbesondere zur Verwendung als Wursthüllen geeignet. Besonders geeignete Hüllen umfassen beschichtete oder nicht beschichtete Faserdärme bzw. -hüllen, insbesondere Viskosehüllen, da diese häufig von Schimmelbefall betroffen sind und die dabei erzeugten Cellulasen diese Hüllen häufig zerstören. Der hierin verwendete Begriff "Lebensmittelhülle" umfasst alle Hüllen, die zum Verpacken bzw. Umhüllen von Lebensmitteln geeignet sind, insbesondere auch Lebensmittelfolien und Tauchfolien (Kunststoffgriffschutz über der Wursthülle).

Gemäß einer bevorzugten Ausführungsform des erfindungsgemäßen Verfahrens wird zusätzlich zu dem Nanosilber wenigstens eine weitere antimikrobielle Verbindung auf die Hülle aufgebracht, vorzugsweise indem eine solche weitere antimikrobielle Verbindung in die Nanosilber enthaltende Zusammensetzung eingemischt und diese dann auf die Hülle aufgebracht wird. Die wenigstens eine weitere antimikrobielle Verbindung kann auch wie oben beschrieben zusammen mit dem Nanosilber in die Hülle eingearbeitet werden. Bevorzugte weitere antimikrobielle und in der Hülle immobilisierte Verbindungen umfassen beispielsweise Natamycin, Nisin oder allgemein für Lebensmittel zugelassene KonservierungsstofFe. Die Art und Menge der eingesetzten antimikrobiellen Verbindung kann von einen Fachmann in Abhängigkeit von den zu bekämpfenden Mikroorganismen auf einfache Weise ermittelt werden.

Ein anderer Gegenstand der vorliegenden Erfindung betrifft eine Lebensmittelhülle mit antimikrobiellen Eigenschaften, die Nanosilber umfasst, das auf die Außenseite der Lebensmittelhülle aufgebracht ist oder in die Hülle eingearbeitet ist. Gemäß einer bevorzugten Ausführungsform ist die Lebensmittelhülle eine mehrschichtige Polymerfolie und das Nanosilber ist auf die Außenseite derselben aufgebracht, oder die Lebensmittelhülle ist eine beschichtete oder nicht beschichtete Viskosehülle und das Nanosilber ist in die Viskose eingearbeitet. Weitere bevorzugte Ausführungsformen einer solchen Lebensmittelhülle ergeben sich aus dem Vorangehenden.

Ein weiterer Gegenstand der vorliegenden Erfindung betrifft die Verwendung der oben beschriebenen erfindungsgemäßen Lebensmittelhülle zum Umhüllen bzw. Verpacken von Lebensmitteln. Unter "Lebensmittel" sind gemäß der vorliegenden Erfindung alle Stoffe oder Erzeugnisse gemeint, die dazu bestimmt sind oder von denen nach vernünftigem Ermessen erwartet werden kann, dass sie in verarbeitetem, teilweise verarbeitetem oder unverarbeitetem Zustand von Menschen verzehrt werden. Das Lebensmittel kann im Rahmen der vorliegenden Erfindung insbesondere Käse, Fleisch, Wurst, einschließlich Aufstriche, und Fisch sein. Bevorzugt ist das Lebensmittel aus Fleisch- oder Wurstwaren ausgewählt.

## Patentansprüche

1. Verfahren zur Herstellung einer Lebensmittelhülle mit antimikrobiellen Eigenschaften, umfassend das Aufbringen von Nanosilber auf die Außenseite der Lebensmittelhülle oder das Einarbeiten von Nanosilber in die Lebensmittelhülle, wobei das Aufbringen von Nanosilber auf die Außenseite der Lebensmittelhülle durch Druckverfahren, Tauchverfahren, Aufsprühen oder Anstreichen erfolgt und das Einarbeiten von Nanosilber in die Lebensmittelhülle durch Einarbeiten des Nanosilbers in Viskose und Herstellen einer Lebensmittelhülle aus der resultierenden Viskose erfolgt.

2. Verfahren nach Anspruch 1,
wobei das Nanosilber in Form einer Zusammensetzung, umfassend Nanosilber, auf die Hülle aufgebracht wird.

3. Verfahren nach Anspruch 2,
wobei die Zusammensetzung ferner wenigstens eine Verbindung ausgewählt aus der Gruppe bestehend aus einem Lack und einem Kleber umfasst.

4. Verfahren nach Anspruch 3,
wobei der Lack ausgewählt ist aus der Gruppe bestehend aus Zweikomponentenlacken, Lacken auf Wasserbasis und Lacken auf Alkoholbasis.

5. Verfahren nach Anspruch 3,
wobei der Kleber ausgewählt ist aus der Gruppe bestehend aus Caseinat, Gelatine, Stärke und Pektin.

6. Verfahren nach einem der Ansprüche 1 bis 5,
wobei das Nanosilber einen mittleren Teilchendurchmesser im Bereich von 5 bis 50 nm aufweist.

7. Verfahren nach einem der Ansprüche 1 bis 6,
wobei die Konzentration des Nanosilbers auf oder in der Hülle 0,1 bis 10 µg pro cm² Hüllenoberfläche beträgt.

8. Verfahren nach einem der Ansprüche 1 bis 7,
wobei die Hülle eine mehrschichtige Polymerfolie ist.

9. Verfahren nach einem der Ansprüche 1 bis 8,
wobei zusätzlich zu dem Nanosilber wenigstens eine weitere antimikrobielle Verbindung auf die Hülle aufgebracht oder in die Hülle eingearbeitet wird.

10. Lebensmittelhülle mit antimikrobiellen Eigenschaften, umfassend Nanosilber,
wobei die Lebensmittelhülle eine mehrschichtige Polymerfolie ist und das Nanosilber auf die Außenseite der Lebensmittelhülle aufgebracht ist oder wobei die Lebensmittelhülle eine beschichtete oder nicht beschichtete Viskosehülle ist und das Nanosilber in die Viskose eingearbeitet ist.

11. Lebensmittelhülle nach Anspruch 10,
die weiter wie in einem der Ansprüche 2 bis 7 und 9 definiert ist.

12. Verwendung einer Lebensmittelhülle nach Anspruch 10 oder 11 zum Umhüllen eines Lebensmittels.

13. Verwendung nach Anspruch 12,
wobei das Lebensmittel Käse, Fleisch, Wurst, Aufstrich oder Fisch ist.

14. Lebensmittel, umfassend eine Lebensmittelhülle nach Anspruch 10 oder 11.

15. Lebensmittel nach Anspruch 14,
wobei das Lebensmittel, Käse, Fleisch, Wurst, Aufstrich oder Fisch ist.
